# EUROPÄISCHE PATENTANMELDUNG

(11) **EP 1 112 899 A2**
(43) Veröffentlichungstag der Anmeldung: **04.07.2001**
(21) Anmeldenummer: 00127905.8
(22) Anmeldetag: 20.12.2000
(51) Int. Cl.: B60R 21/20

(54) **Gassack-Modul**

(30) Priorität: 30.12.1999 DE 29922987 U
(71) Anmelder: TRW Occupant Restraint Systems GmbH & Co. KG, 73553 Alfdorf (DE)
(72) Erfinder: Ellerbrok, Norbert, 73635 Rudersberg (DE)
(74) Vertreter: Kitzhofer, Thomas, Dipl.-Ing.

(57) **Zusammenfassung**

Die Erfindung betrifft ein Gassack-Modul mit einer Modulabdeckung (3), die wenigstens eine bei Aktivierung des Moduls bewegbare Öffnungsklappe (13 bis 25) aufweist. Die Öffnungsklappe (17) ist im geöffneten Zustand der Modulabdeckung einerseits mit einem Fangband (51) am Modul und andererseits über eine Achse (31), zu der sich die Öffnungsklappe (17) beim Öffnen relativ bewegt, an der Modulabdeckung (3) befestigt. Das Gassack-Modul ist dadurch gekennzeichnet, daß Achse (31) und Fangband (51) so an der Öffnungsklappe (17) angeordnet sind und diese eine solche Festigkeit hat, daß ihre Geometrie beim Öffnen verändert wird und sich die Öffnungsklappe (17) in einem geringeren Maß (r) in Richtung Fahrgastinnenraum bewegt als ohne das Fangband (51).

## Beschreibung

Die Erfindung betrifft ein Gassack-Modul, mit einer Modulabdeckung, die wenigstens eine bei Aktivierung des Moduls bewegbare Öffnungsklappe aufweist, wobei die Öffnungsklappe in geöffnetem Zustand der Modulabdeckung einerseits mit einem Fangband am Modul und andererseits über eine Achse, zu der sich die Öffnungsklappe beim Öffnen relativ bewegt, an der Modulabdeckung befestigt ist.

Die bisherigen Modulabdeckungen klappen üblicherweise beim Öffnen nach außen, wobei die Öffnungsklappe einen relativ großen Schwenkradius hat. Dieser Schwenkradius könnte unter Umständen den Insassen, der zu nahe am Gassack-Modul sitzt, verletzen, insbesondere bei einer sogenannten Out-of-Position Sitzhaltung des Insassen oder einem Sekundäraufprall.

Die Erfindung schafft ein Gassack-Modul, das eine Öffnungsklappe aufweist, welche sich beim Öffnen weniger weit in Richtung zum Insassen bewegt. Dies wird bei einem Gassack-Modul der eingangs genannten Art dadurch erreicht, daß Achse und Fangband so an der Öffnungsklappe angeordnet sind und diese eine solche Festigkeit aufweist, daß ihre Geometrie beim Öffnen verändert wird und sich die Öffnungsklappe in einem geringeren Maß in Richtung Fahrgastinnenraum bewegt als ohne das Fangband. Beim erfindungsgemäßen Gassack-Modul hat das Fangband die Aufgabe, die Modulabdeckung in ihrer Geometrie zu verändern. Dies wird dadurch erreicht, daß eine auf die Öffnungsklappe z.B. durch den sich entfaltenden Gassack oder durch eine andere Einrichtung wirkende Kraft in der Achse und im Fangband eine Gegenkraft hervorruft. Unter Beeinflussung dieser Kräfte und Gegenkräfte wird die Öffnungsklappe vorzugsweise gebogen oder gar geknickt und in diesem Zustand von der Entfaltungsöffnung für den Gassack wegbewegt. Durch die Geometrieänderung der Öffnungsklappe verursacht, benötigt diese einen geringeren Raum während des Öffnungsvorgangs. Ist die Achse beispielsweise eine reine Schwenkachse, so wird die Öffnungsklappe einen geringeren Schwenkradius haben als ohne das Fangband. Der Begriff Schwenkradius kann in diesem Zusammenhang auch ungenau sein, denn wenn die Öffnungsklappe ihre Geometrie während der Öffnungsbewegung verändert, können beliebige Bewegungsbahnen für den maßgeblichen äußeren Rand der Öffnungsklappe erzeugt werden.

Damit diese Bewegungsbahnen möglichst vorbestimmt werden können, sind eine oder mehrere Biege- oder Knickstellen in der Öffnungsklappe vorgegeben, die beispielsweise durch eine Art Filmscharnier oder eine sonstige Schwächung in der Abdeckung erzeugt werden können.

Gemäß der bevorzugten Ausführungsform ist die Achse eine feststehende Schwenkachse, die durch ein Filmscharnier gebildet ist. Diese Ausbildung der Achse ist sehr kostengünstig.

Der Gassack wird üblicherweise die Öffnungsklappe, die einstückig an der Modulabdeckung ausgebildet ist, nach außen drücken und die Modulabdeckung aufreißen. Dabei kann er unter Umständen bewußt das Fangband so drücken oder bewegen, daß er die geometrische Verformung der Öffnungsklappe hervorruft. Damit dieser Ablauf, nämlich das Aufreißen, Bewegen der Öffnungsklappe und die ausreichend große Krafteinleitung zur Hervorrufung der Geometrieänderung vorbestimmbar erfolgt, sieht eine Ausgestaltung der Erfindung eine Entfaltungsbegrenzungseinrichtung am Gassack vor, die zu Beginn des Entfaltungsvorgangs wirkt und Abschnitte des Gassacks zu vorbestimmten Stellen des Fangbandes richtet. Die Entfaltungsbegrenzungseinrichtung kann beispielsweise ein den gefalteten Gassack einschnürendes Band sein, das während des Entfaltungsvorgangs reißt, aber zu Beginn des Entfaltungsvorgangs die anfängliche Entfaltungsrichtung vorgibt.

Bei der bevorzugten Ausführungsform ist das Fangband so kurz, daß es eine Rückhaltekraft auf die Öffnungsklappe ausübt, die zur Veränderung von deren Geometrie führt, wenn die Entfaltungsöffnung für den Gassack zu etwa 20 bis 50 Prozent geöffnet ist. Dies wird bezogen auf den Öffnungsquerschnitt. Damit soll sichergestellt werden, daß bereits in der Anfangsphase der Öffnungsbewegung die Öffnungsklappe gebogen oder geknickt wird.

Bei der bevorzugten Ausführungsform hat die Modulabdeckung ein außenseitiges Emblem, wobei das Fangband rückseitig im Bereich des Emblems an der Innenseite der Öffnungsklappe angebracht oder in sie eingebettet ist und somit das schwerste Teil der Abdeckung unmittelbar zurückhalten kann.

Weitere Merkmale und Vorteile der Erfindung ergeben sich aus der nachfolgenden Beschreibung und aus den nachfolgenden Zeichnungen, auf die Bezug genommen wird. In den Zeichungen zeigen:
- Fig. 1 eine Unteransicht einer Modulabdeckung als Teil des erfindungsgemäßen Gassack-Moduls,
- Fig. 2 eine stilisierte Querschnittsansicht durch ein erfindungsgemäßes Gassack-Modul, das eine Modulabdeckung nach Fig. 1 aufweist,
- Fig. 3 eine stilisierte Querschnittsansicht einer zweiten Ausführungsform des erfindungsgemäßen Gassack-Moduls mit geschlossener Abdeckung,
- Fig. 4 das Gassack-Modul nach Fig. 3 kurz nach dem Beginn des Öffnungsvorgangs,
- Fig. 5 das Gassack-Modul nach Fig. 3 mit weiter geöffneter Öffnungsklappe und
- Fig. 6 das Gassack-Modul nach Fig. 3 mit vollständig geöffneter Öffnungsklappe.

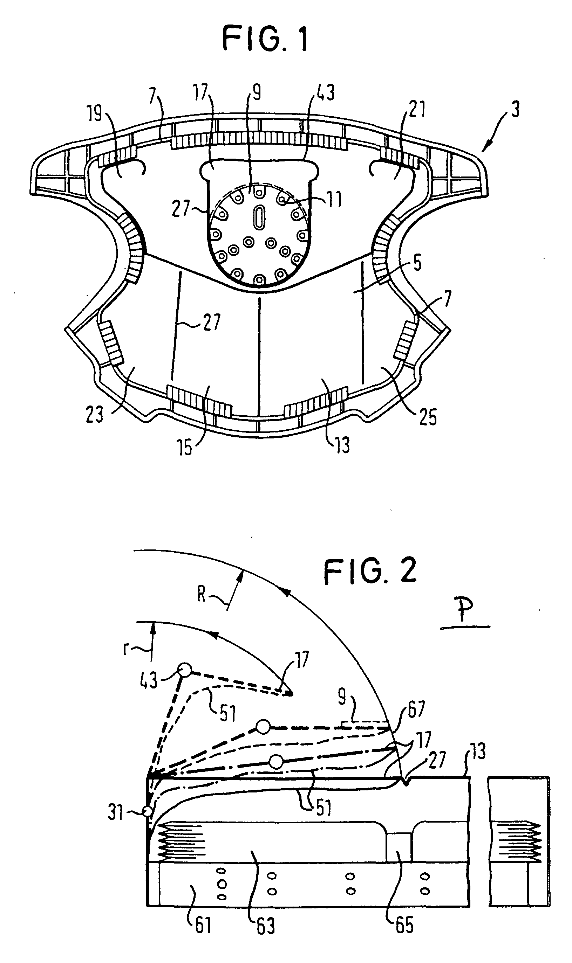

In Fig. 1 ist eine Modulabdeckung für ein Lenkrad-Gassack-Modul dargestellt. Die Modulabdeckung 3 weist eine Vorderwand 5, die dem Fahrer zugewandt ist, und eine umlaufende Seitenwand 7 auf. An der Vorderwand 5 ist außenseitig ein Emblem 9, welches mit unterbrochenen Linien dargestellt ist, angebracht. Rückseitig sind mehrere Niete 11 zur Befestigung des Emblems 9 zu sehen. Die Modulabdeckung hat mehrere Öffnungsklappen 13 bis 25, die durch Aufreißlinien (Schwächungen in der Modulabdeckung), welche mit dem Bezugszeichen 27 versehen sind, definiert werden. Am Übergang der Öffnungsklappen 13 bis 25 zur Seitenwand 7 sind Filmscharniere 31 vorgesehen, die als Achsen, genauer gesagt als Schwenkachsen, dienen.

Die Öffnungsklappe 17 ist diejenige, an der das Emblem 9 befestigt ist und die auf keinen Fall in Kontakt mit dem Insassen kommen sollte. Die Öffnungsklappe 17, die sich von den zwei parallelen Abschnitten der Aufreißlinie 27 bis zur Seitenwand 7 erstreckt, hat im Bereich zwischen der Seitenwand 7 und dem Emblem 9 eine zur zugehörigen Achse 31 der Öffnungsklappe 17 parallele vorgegebene Knickstelle 43, die durch eine Schwächung der Öffnungsklappe 17 in einem linienförmigen Bereich gebildet ist.

Durch die Niete 11 wird nicht nur das Emblem 9 an der Vorderwand 5, sondern auch ein Fangband 51, das in Fig. 2 gezeigt ist, an der Öffnungsklappe 17 angebracht. In Fig. 2 sind ferner der Gasgenerator 61 und der gefaltete Gassack 63 als Bestandteile des Gassack-Moduls zu sehen. Der Gassack 63 weist im Bereich unterhalb der Aufreißlinie 27, also am Übergang zwischen den Öffnungsklappen 13, 15 zur Öffnungsklappe 17 ein ihn umgebendes Band 65 auf, welches als Entfaltungsbegrenzungseinrichtung wirkt und, wie im folgenden noch erläutert wird, während des Entfaltungsvorgangs reißt. In der linken Hälfte des in Fig. 2 dargestellten Gassack-Moduls sind mehrere Phasen während der Öffnungsbewegung der Öffnungsklappe 17 zu sehen.

Beim Aktivieren des Gasgenerators 61 wird Gas in den Gassack 63 eindringen, und der Gassack wird sich entfalten. Das Band 65 trennt den Gassack 63 in zwei Hälften, so daß zu Beginn des Entfaltungsvorgangs sich diese zwei Hälften separat entfalten, und zwar in Richtung zur Mitte der jeweiligen Öffnungsklappe 17 bzw. 13, 15. Durch den Druck, der auf die Öffnungsklappen aufgebracht wird, reißt die Vorderwand 5 im Bereich der Aufreißlinien 27, und es bilden sich die Öffnungsklappen heraus. Anfänglich schwenkt die Öffnungsklappe 17 als starre Einheit um ihre Schwenkachse 31 in Richtung zum Fahrgastinnenraum, in bezug auf Fig. 2 nach oben. Bereits nach einem geringen Schwenkwinkel, die Entfaltungsöffnung 67 ist noch nicht einmal zur Hälfte geöffnet, kommt es dazu, daß der Gassack auf das Fangband 51 eine solche Kraft ausübt, daß die Öffnungsklappe 17 im Bereich der Knickstelle 43 knickt. Die Öffnungsklappe 17 verschwenkt dann weiter gegen den Uhrzeigersinn, aber diese Verschwenkung erfolgt im geknickten Zustand. Durch das Knicken bewegt sich die Öffnungsklappe 17 um ein geringeres Maß r in Richtung zum Fahrer als ohne Knicken. Vorliegend ist somit der Schwenkradius r der Öffnungsklappe 17 beim Öffnen um die Schwenkachse 31 geringer als das Maß (in Form des Schwenkradius R), das die Öffnungsklappe 17 ohne einzuknicken bei der Öffnungsbewegung beschreiben würde. Das bedeutet, daß auch das Gefährdungspotential für den Insassen geringer ist. Die Lage der Schwenkachse 31, die Länge des Fangbandes 51 und ihre Anbindung einerseits an der Öffnungsklappe 17 und andererseits am Gassack-Modul (z.B. an der Modulabdeckung oder einem Gehäuseteil wie einem Gasgeneratorträgerblech) sowie die Entfaltungsrichtung des Gassacks 63 und die Stabilität der Öffnungsklappe müssen so aufeinander abgestimmt sein, daß die Öffnungsklappe 17 während des Öffnungsvorgangs geknickt wird und damit eine Änderung ihrer Geometrie erfährt.

Es muß auch nicht zwingend ein Einknicken der Öffnungsklappe 17 erfolgen, es reicht unter Umständen aus, wenn diese gebogen wird. Im übrigen ist die Bewegungsbahn, die das äußere Ende der Öffnungsklappe 17 beim Öffnungsvorgang beschreibt, kein Kreis, sondern vorzugsweise eine Art Ellipsenbahn. Das Bezugszeichen r ist in diesem Fall der größte Abstand, den ein Abschnitt der Öffnungsklappe 17 während des Öffnungsvorgangs von der Schwenkachse 31 hat. Wenn sich der Gassack 63 weiter entfaltet, reißt schließlich das Band 65, und der Gassack kann sich voll entfalten und über die dann vollständig freiliegende Entfaltungsöffnung 67 heraustreten.

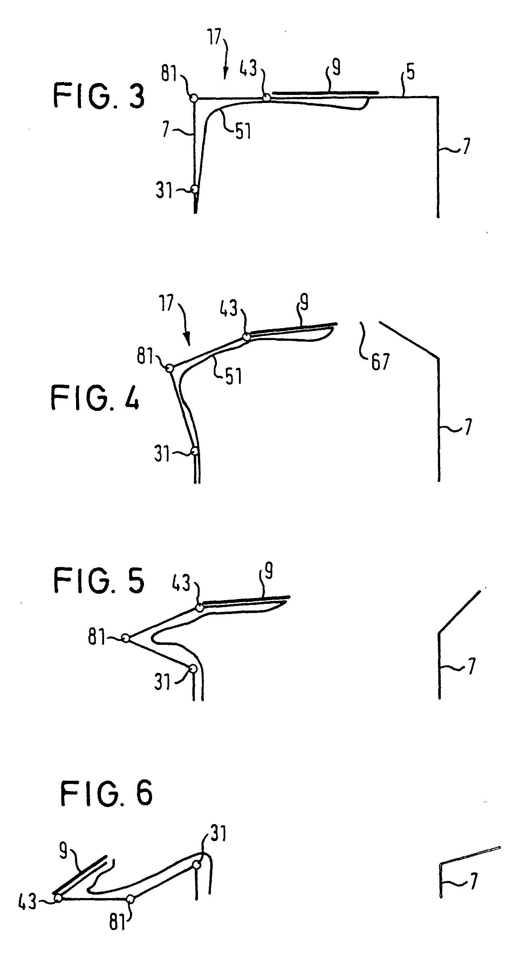

Bei der Ausführungsform nach den Fig. 3 bis 6 sind mehrere Knickstellen vorgesehen, und zwar ist zwischen der Knickstelle 43 und der Schwenkachse 31 im Bereich des Übergangs zwischen der Vorderwand 5 und der Seitenwand 7 noch eine zweite Knickstelle 81 in der Öffnungsklappe 17 definiert. Durch die zusätzliche Knickstelle 81 ist es möglich, daß die Öffnungsklappe 17 noch weniger weit in Richtung zum Insassen bewegt wird, wenn sie sich öffnet. Die einzelnen Phasen der Öffnungsbewegung sind in den Fig. 4 bis 6 dargestellt. Auch bei dieser Ausführungsform üben Abschnitte, wie die zuvor anhand von Fig. 2 beschriebenen Hälften des Gassacks 63 zu bestimmten Zeitpunkten an vorbestimmten Stellen des Fangbandes 51 Kräfte auf es aus, die zum Einknicken der Öffnungsklappe 17 führen. Wie in Fig. 4 zu erkennen ist, wird zu Beginn des Öffnungsvorgangs die Knickstelle 81 so gut wie gar nicht in Anspruch genommen, die Knickstelle 43 kaum, so daß die Öffnungsklappe 17 praktisch ohne Geometrieänderung um die Schwenkachse 31 nach außen schwenkt. Wenn die Entfaltungsöffnung 67 zu weniger als 50 Prozent bezogen auf den endgültigen Zustand (Fig. 6) geöffnet ist, ist ein Einknicken an der Knickstelle 43 deutlich zu erkennen (Fig. 5).

Das Maß, um das sich die mit zwei Knickstellen versehene Öffnungsklappe in Richtung zum Insassen bewegt, kann durch diese Ausführungsform nochmals deutlich verringert werden. Im übrigen ist es auch nicht zwingend notwendig, daß der Gassack während des Entfaltens auf das Fangband 51 drückt und zum Einknicken der Öffnungsklappe 17 führt. Genausogut kann das Fangband 51 sehr kurz ausgebildet sein, so daß der äußere Rand des freien Endes der Öffnungsklappe 17 gar nicht ganz nach außen schwenken kann, wie dies in Fig. 2 anhand des Radius R dargestellt ist. In diesem Fall würde der Gassack unmittelbar auf die Öffnungsklappe 17 drücken und diese zwischen ihren Lagerungen (Fangband 51 und Schwenkachse 31) knicken.

## Patentansprüche

1. Gassack-Modul, mit einer Modulabdeckung (3), die wenigstens eine bei Aktivierung des Moduls bewegbare Öffnungsklappe (13 bis 25) aufweist, wobei die Öffnungsklappe (17) im geöffneten Zustand der Modulabdeckung einerseits mit einem Fangband (51) am Modul und andererseits über eine Achse (31), zu der sich die Öffnungsklappe (17) beim Öffnen relativ bewegt, an der Modulabdeckung (3) befestigt ist,
dadurch gekennzeichnet, daß Achse (31) und Fangband (51) so an der Öffnungsklappe (17) angeordnet sind und diese eine solche Festigkeit hat, daß ihre Geometrie beim Öffnen verändert wird und sich die Öffnungsklappe (17) in einem geringeren Maß (r) in Richtung Fahrgastinnenraum bewegt als ohne das Fangband (51).

2. Gassack-Modul nach einem der vorhergehenden Ansprüche, dadurch gekennzeichnet, daß die Öffnungsklappe (17) zwischen Achse (31) und Fangband (51) eine vorgegebene Biege- oder Knickstelle (43, 81) aufweist, um die die Öffnungsklappe (17) beim Öffnen gebogen bzw. geknickt wird.

3. Gassack-Modul nach einem der vorhergehenden Ansprüche, dadurch gekennzeichnet, daß mehrere vorgegebene Biege- oder Knickstellen (43, 81) vorgesehen sind.

4. Gassack-Modul nach Anspruch 2 oder 3, dadurch gekennzeichnet, daß die Öffnungsklappe (17) um ein Filmscharnier geknickt wird.

5. Gassack-Modul nach einem der vorhergehenden Ansprüche, dadurch gekennzeichnet, daß die Achse (31) eine feststehende Schwenkachse ist.

6. Gassack-Modul nach Anspruch 5, dadurch gekennzeichnet, daß die Schwenkachse durch ein Filmscharnier gebildet ist.

7. Gassack-Modul nach Anspruch 5 oder 6, dadurch gekennzeichnet, daß die Öffnungsklappe (17) in gebogenem oder geknicktem Zustand um die Achse (31) nach außen schwenkt.

8. Gassack-Modul nach einem der Ansprüche 2 bis 7, dadurch gekennzeichnet, daß die Biege- oder Knickstelle (43, 81) und das Fangband (51) so zueinander angeordnet sind, daß der äußere Rand der Öffnungsklappe (17) beim Öffnen eine im wesentlichen ellipsenförmige Bahn beschreibt.

9. Gassack-Modul nach einem der vorhergehenden Ansprüche, dadurch gekennzeichnet, daß es einen Gassack (63) aufweist, der so entfaltet wird, daß er auf das Fangband (51) drückt und eine geometrische Verformung der Öffnungsklappe (17) hervorruft.

10. Gassack-Modul nach Anspruch 9, dadurch gekennzeichnet, daß am Gassack (63) eine Entfaltungsbegrenzungseinrichtung vorgesehen ist, die zu Beginn des Entfaltungsvorgangs einen Abschnitt des Gassacks zu dem Fangband richtet, um dieses zu kontaktieren.

11. Gassack-Modul nach Anspruch 10, dadurch gekennzeichnet, daß die Entfaltungsbegrenzungseinrichtung ein um den gefalteten Gassack geschnürtes Band (65) ist, das während des Entfaltungsvorgangs reißt.

12. Gassack-Modul nach einem der vorhergehenden Ansprüche, dadurch gekennzeichnet, daß das Fangband (51) so kurz ist, daß bereits dann eine Kraft über das Fangband auf die Öffnungsklappe ausgeübt wird, die zur Veränderung von deren Geometrie führt, wenn die Entfaltungsöffnung zu etwa 20 bis 50 Prozent geöffnet ist.

13. Gassack-Modul nach einem der vorhergehenden Ansprüche, dadurch gekennzeichnet, daß ein auf der Außenseite der Öffnungsklappe (17) angebrachtes Emblem vorgesehen ist, wobei das Fangband (51) im Bereich des Emblems an der Innenseite der Öffnungsklappe (17) angebracht oder in die Öffnungsklappe (17) eingebettet ist.
